# EUROPÄISCHE PATENTANMELDUNG

(11) **EP 2 287 466 A2**
(43) Veröffentlichungstag der Anmeldung: **23.02.2011**
(21) Anmeldenummer: 10006860.0
(22) Anmeldetag: 02.07.2010
(51) Int. Cl.: F03D 11/00

(54) **Energieversorgungsnetze einer Windkraftanlage**

(30) Priorität: 11.08.2009 DE 202009010869 U
(71) Anmelder: Wieland Electric GmbH, 96045 Bamberg (DE)
(72) Erfinder: Müller, Thomas, 96199 Zapfendorf (DE); Kadur, Stefan, 96110 Schesslitz (DE)
(74) Vertreter: Hafner-Tergau-Walkenhorst

(57) **Zusammenfassung**

Zur Unterstützung der Arbeit eines Servicepersonals in einer Windkraftanlage ist ein Energieversorgungsnetz (4) zur internen Energieversorgung eines Trägermastes der Windkraftanlage vorgesehen. Das Energieversorgungsnetz (4) umfasst
• eine Energiebusleitung (6),
• mindestens einen Abgriff (12) an der Energiebusleitung (6) zum Abgreifen eines elektrischen Potentials und
• einen an den Abgriff (12) angeschlossenen elektrischen Gerät (16), wobei das elektrische Gerät am Abgriff (21) sowohl elektrisch angeschlossen als auch mechanisch adaptiert ist.

## Beschreibung

Die Erfindung betrifft ein Energieversorgungsnetz zur internen Energieversorgung eines Trägermastes einer Windkraftanlage mit einer Energiebusleitung, mit mindestens einem Abgriff an der Energiebusleitung zum Abgreifen eines elektrischen Potentials und mit einem an den Abgriff angeschlossenen elektrischen Gerät. Die Erfindung betrifft weiterhin einen elektrischen Steckverbinder.

Der Trägermast einer Windkraftanlage, weiterhin einfach als Mast bezeichnet, auf den die schwere Gondel mit den Rotorblättern aufgesetzt ist, ist ein hochbelastetes Bauteil. Der Mast muss unter allen Betriebsbedingungen den Schwingungen der Gondel und den auftretenden Windkräften sicher widerstehen. Der Mast ist als hohler Rohrturm ausgebildet. Er besteht aus mehreren zylinderförmigen Rohrabschnitten. An den flanschartig ausgebildeten Enden der einzelnen Rohrabschnitte sind Verschraubungen vorhanden, die regelmäßig überprüft werden müssen, da infolge der Rotationsbewegung der Rotorblätter erhebliche Schwingungen auf den Rohrturm übertragen werden. Hierfür steigt das Servicepersonal in das Innere des Rohrturms. Im Rohrturm ist ein geeignetes Energieversorgungsnetz entlang der gesamten Höhe des Rohrturms vorhanden, insbesondere zur Energieversorgung der Innenbeleuchtung des Rohrturms.

Der Erfindung liegt die Aufgabe zugrunde ein optimiertes Energieversorgungsnetz für einen Trägermastes einer Windkraftanlage anzugeben, welches die Arbeit eines Servicepersonals erleichtert.

Die Aufgabe wird erfindungsgemäß gelöst durch ein Energieversorgungsnetz zur internen Energieversorgung eines Trägermastes einer Windkraftanlage, mit einer Energiebusleitung, mit mindestens einem Abgriff an der Energiebusleitung zum Abgreifen eines elektrischen Potentials und mit einem an den Abgriff angeschlossenen elektrischen Gerät, wobei das elektrische Gerät am Abgriff sowohl elektrisch angeschlossen als auch mechanisch adaptiert ist.

Bei dem Energieversorgungsnetz geht es nicht um die Ableitung der durch den Rotor in der Windkraftanlage generierten Energie, sondern in erster Linie um die Energieversorgung des Innenlebens des Trägermastes zur Unterstützung einer Wartung der Windkraftanlage. Hierfür ist die Energiebusleitung vorgesehen, die sich über die Länge des gesamten Trägermastes erstreckt, so dass auf jeder beliebigen Höhe elektrischer Strom zur Verfügung steht. An der Energiebusleitung ist zumindest ein Abgriff vorgesehen, mit dessen Hilfe das elektrische Potential der Energiebusleitung abgegriffen wird, so dass in das elektrische Gerät elektrischer Strom eingespeist wird.

Das elektrische Gerät ist dabei am Abgriff sowohl elektrisch angeschlossen als auch mechanisch adaptiert. Dies bedeutet, dass das elektrische Gerät über eine Form- oder Kraftschlussverbindung, z.B. durch eine Rast- oder Schnappverbindung oder durch Aufstecken, mechanisch und insbesondere trennbar mit dem Abgriff gekoppelt ist. Der Anschluss des elektrischen Geräts an den Abgriff erfüllt somit zwei Funktionen - auf der einen Seite wird das elektrische Gerät mit elektrischem Strom aus der Energiebusleitung versorgt und auf der anderen Seite wird es an der Energiebusleitung mechanisch fixiert, so dass seine Position definiert ist. Der wesentliche Vorteil des Energieversorgungsnetzes ist die hohe Flexibilität bei dem Anschluss des elektrischen Geräts: durch den Abgriff wird das elektrische Gerät an einer beliebigen Stelle entlang der Energiebusleitung fixiert und steht dort zur Verfügung, wo es gebraucht wird.

Gemäß einer bevorzugten Ausgestaltung ist als Abgriff ein Steckverbinderunterteil mit Anschlusskontakten zur Kontaktierung der Energiebusleitung und mit Stecker- und /oder Buchsenkontakten als Anschluss an das elektrische Gerät vorgesehen. Hierbei handelt es sich insbesondere um das Steckverbinderunterteils eines schweren Industriesteckverbinders. Schwere Industriesteckverbinder sind Steckverbinder, die speziell für den Einsatz in besonders rauen Umgebungen konzipiert sind. Die schweren Industriesteckverbinder sind z.B. durch die Klasse nach IEC 60603-7-3 definiert. Ein Steckverbinder setzt sich in der Regel aus einem Steckverbinderunterteil sowie einem aufsteckbaren Steckverbinderoberteil zusammen. Das Steckverbinderunterteil weist Steckeroder Buchsenkontakte auf, die einen Kontakteinsatz zum Herstellen der elektrischen Verbindung zum aufgesteckten Steckverbinderoberteil bilden. Genau diese Stecker- oder Buchsenkontakte werden benutzt, um das elektrische Gerät zu kontaktieren, welches einen korrespondierenden Kontakteinsatz aufweist. Der Vorteil hierbei ist, dass auch bereits vorhandene Steckverbinderoberteile von Industriesteckverbindern für das Energieversorgungsnetz genutzt werden können, wobei keine konstruktiven Änderungen der Steckverbinderunterteile erforderlich sind.

Gemäß einer bevorzugten Ausgestaltung ist eine an der der Energiebusleitung im Montageendzustand zugewandten Unterseite des Steckverbinderunterteils ausgebildete und über die Energiebusleitung stülpbare Nut mit aus dem Nutgrund vorspringenden Durchdringungskontakten zur Schneid-Klemmkontaktierung der Energiebusleitung vorgesehen. Die Durchdringungskontakte sind z.B. Lanzen, Spitzen oder scharfe Kanten, welche die Isolierung der Energiebusleitung durchdringen und den Leiter kontaktieren. Es entsteht hierbei eine einfache und schnelle Anbringung des Steckverbinderunterteils an die Energiebusleitung, wobei die Kontaktierung zwischen dem Steckverbinderunterteil und der Energiebusleitung ohne Abmanteln oder Abisolieren der Energiebusleitung erfolgt.

Zweckdienlicherweise ist mindestens ein, vorzugsweise zwei an den Enden des Steckverbinderunterteils angeordnete schwenkbare Rasthaken zur mechanischen Fixierung des Steckverbinderoberteils auf dem Steckverbinderunterteil vorgesehen. Dank der Rasthaken wird ein sicheres Einrasten des Steckverbinderoberteils auf dem Steckverbinderunterteil ermöglicht.

Vorteilhafterweise sind das elektrische Gerät und das Steckverbinderoberteil einstückig ausgebildet. Das elektrische Gerät, welches in diesem Fall ein Energieendverbraucher ist, ist hierbei ein integrales Bauteil des Steckverbinderoberteils, so dass sie eine Einheit bilden. Das elektrische Gerät muss somit nicht vor Ort mit dem Steckverbinderoberteil verbunden werden, sondern beide werden zu einem früheren Zeitpunkt zusammengefügt und als eine Einheit gelagert und zum Einsatzort transportiert werden. Die Verbindung zwischen dem Steckverbinderoberteil und dem elektrischen Gerät ist dabei vorzugsweise lösbar, beispielweise wird das elektrische Gerät auf das Steckverbinderoberteil aufgesteckt, so dass das elektrische Gerät bei Funktionsstörungen einfach ausgetauscht werden kann.

Weiterhin von Vorteil ist, dass ein Leuchtelement, insbesondere eine LED-Leuchte als elektrisches Gerät eingesetzt wird. Zweckdienlicherweise sind dabei drei Leuchtelemente pro Steckverbinderoberteil vorgesehen. Die Leuchten werden insbesondere an mehreren Stellen über die Länge der Energiebusleitung angebracht und erleichtern die Wartungsarbeit im Turm, weil dadurch der ganze Turm beleuchtet ist und insbesondere keine oder sehr wenige weiteren Lichtquellen benötigt werden. LED-Leuchten stellen hierbei eine bevorzugte Ausführung der Leuchtelemente dar, da sie eine sehr hohe Lebensdauer haben. Sie reduzieren somit die Betriebs- und Wartungskosten, benötigen nur geringe Betriebsspannungen und sind extrem unempfindlich. Das Energieversorgungsnetz ist jedoch nicht auf den Einsatz von Leuchten beschränkt. Alternativ zu den Leuchten können auch andere elektrische Geräte wie z.B. Steckdosen, an den Abgriff angeschlossen werden.

Nach einer bevorzugten Variante ist der Trägermast ein aus mehreren Rohrabschnitten zusammengesetzter Rohrturm und jeder Rohrabschnitt weist mindestens einen ungeschnittenen und an seine jeweilige Rohrlänge angepassten Energiebusteilstrang auf, derart, dass sich die Energiebusleitung aus den jeweiligen Energiebusteilsträngen der einzelnen aufeinandergesetzten Rohrabschnitte zusammensetzt. Die Rohrabschnitte können hinsichtlich ihrer Länge erheblich differenzieren. Außerdem werden für gewöhnlich sogenannte Durchfallschotts eingesetzt, um eine herabstürzende Person beim Sturz abzufangen. Es liegt daher beim Aufbau des Trägermastes ein sehr geringer Vorfertigungsgrad vor. Der Vorteil der beschriebenen Energiebusleitung ist, dass diese als eine quasi endlose Leitung hergestellt wird und im Nachhinein an die Länge der Rohrabschnitte durch Zuschneiden auf Maß angepasst wird. Die Energiebusleitung ist im jeweiligen Rohrabschnitt ungeschnitten. Lediglich bei der Installation des Energieversorgungsnetzes in die Windkraftanlage werden die einzelnen Energiebusteilstränge individuell zugeschnitten und die Abgriffe mit den elektrischen Geräten auf der Energiebusleitung platziert. Um die Energiebusleitung durch die Durchfallschotts zu führen, sind vorzugsweise die einzelnen Energiebusteilstränge an ihren Enden über Industriesteckverbinder miteinander verbunden.

Der Anschluss der elektrischen Geräte an die Energiebusleitung wird zusätzlich erleichtert, indem die Energiebusleitung mit mehreren Abgriffen vorkonfektioniert ist, die insbesondere in gleichen Abständen angebracht sind. Die Abgriffe sind beispielsweise in Abständen von einigen 10 cm voneinander entfernt, insbesondere in Abständen von 30 bis 80 cm. Bei der Installation des Energieversorgungsnetzes werden die vorkonfektionierten Energiebusteilstränge zugeschnitten und die elektrischen Geräte werden an ausgewählten Stellen an die bereits auf den Energiebusteilsträngen vorhandenen Abgriffe angeschlossen.

Im Falle einer Betriebsstörung des Energieversorgungsnetzes ist eine Batterie zur Notstromversorgung des elektrischen Geräts vorgesehen. Somit wird gewährleistet, dass das elektrische Gerät jederzeit mit elektrischem Strom versorgt und somit voll funktionstüchtig ist.

Die Aufgabe wird weiterhin erfindungsgemäß gelöst durch einen elektrischen Steckverbinder umfassend ein Steckverbinderunterteil mit Anschlusskontakten zur Kontaktierung einer Busleitung sowie ein Steckverbinderoberteil mit zumindest einem, vorzugsweise drei integrierten Leuchtelementen. Der Steckverbinder, der einen Abgriff bildet, wird über die Anschlusskontakte des Steckverbinderunterteils, insbesondere mittels eines Durchdringungskontakts, an eine Energiebusleitung elektrisch angeschlossen, wobei das Steckverbinderunterteil auf diese Weise auch mechanisch fixiert wird. Das Steckverbinderoberteil mit den Leuchtelementen bildet dabei eine Funktionsbaugruppe, die mit Hilfe des Abgriffs mit Energie versorgt wird. Durch das Aufsetzen des Steckverbinderoberteils werden die Leuchtelemente mit elektrischem Strom versorgt und eingeschaltet. Die Leuchtelemente sind dabei bevorzugt aufsattelbare Leuchtelemente und können einzeln auf- und ausgesteckt werden. Als Funktionsbaugruppe kann außerdem z.B. eine s.g. CEE-Steckdose, eine normale 230V Steckdose oder ein Wartungsschalter eingesetzt werden.

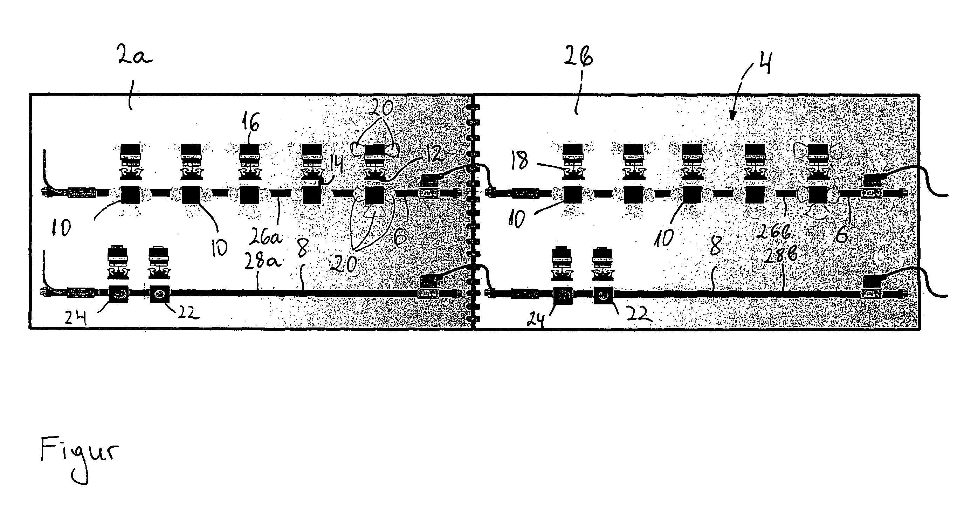

Ein Ausführungsbeispiel der Erfindung wird anhand einer Zeichnung näher erläutert. Hierin zeigt die einzige Figur ein Teil eines Energieversorgungsnetzes für eine Windkraftanlage.

Die Figur zeigt eine Ansicht auf einen Teilbereich der Innenwand zweier Segmente 2a, 2b. Die Segmente 2a, 2b bilden zwei Rohrabschnitte eines nicht näher gezeigten Trägermastes einer Windkraftanlage. Entlang der Innenwand der Segmente 2a, 2b verläuft ein Energieversorgungsnetz 4 der Windkraftanlage, welches zwei parallele Energiebusleitungen 6, 8 umfasst und sich über die gesamte Höhe des Trägermastes erstreckt.

Die erste Energiebusleitung 6 ist als Flachkabel ausgebildet, über dessen Länge mehrere Module 10 verteilt angeordnet sind, die nach Art von Blocks dargestellt sind. Seitlich der beiden Energiebusleitungen 6 ,8 sind außerdem die Module 10 in einer Seitenansicht gezeigt.

Die Module 10 der ersten Energiebusleitung 6 umfassen einen Abgriff 12 zum Abgreifen eines elektrischen Potentials, der durch ein Steckverbinderunterteil eines Industriesteckverbinders gebildet ist. An der Unterseite 14 des Steckverbinderunterteils 12, die im Montageendzustand der Energiebusleitung 6 zugewandt ist, sind in einer über die Energiebusleitung 6 stülpbare, nicht näher gezeigten Nut Durchdringungskontakte zur Schneid-Klemmkontaktierung der Energiebusleitung 6 ausgebildet. An seiner gegenüberliegenden Seite weist das Steckverbinderunterteil 12 Steckerkontakte zum Anschluss eines elektrischen Geräts auf. Das Steckverbinderunterteil 12 weist außerdem zwei Rasthaken 18 zum Verriegeln eines Steckverbinderoberteils 16 auf.

Jedes der Module 10 ist somit ein Industriesteckverbinder. Als Abgriff 12 dient also das Steckverbinderunterteil eines bekannten Industriesteckverbinders 10.

Im gezeigten Ausführungsbeispiel ist das elektrische Gerät jeweils aus drei Leuchtelementen 20 gebildet, die im Steckverbinderoberteil 16 integriert sind. Die drei Leuchtelemente 20 sind durch ihre Lichtstrahlung angedeutet. Die drei Leuchtelemente 20 sind LED-Leuchten, die auf dem Steckverbinderoberteil 16 aufgesteckt sind und einen integralen Bestandteil der Steckverbinderoberteile 16 bilden. Die LED-Leuchten 20 werden dabei durch Stecken und Verriegeln des Steckverbinderoberteils 16 mit dem Steckverbinderunterteil 12 auf der Energiebusleitung 6 fixiert und mit Energie aus der Energiebusleitung 6 versorgt. Optional ist eine Batterie für die Notstromversorgung der LED-Leuchten 20 integriert. Durch den modularen Aufbau der Industriesteckverbinder 10 können die Steckverbinderoberteile 16 mit den LED-Leuchten 20 oder einzelnen LED-Leuchten schnell ausgetauscht werden, ohne dass die anderen Industriesteckverbinder 10 vom Netz getrennt werden.

Anstelle der LED-Leuchten 20 können auch andere elektrische Geräte an die Energiebusleitungen 6, 8 angeschlossen werden. Dies ist beispielsweise anhand der Energiebusleitung 8 gezeigt. Die Energiebusleitung 8 ist hierbei eine Starkstromleitung, an der über die Abgriffe 12 2-polige-Wartungssteckdosen 22 und 5-polige-Wartungssteckdosen 24 angeschlossen sind.

Die Energiebusleitungen 6, 8 umfassen mehrere Energiebusteilstränge 26a, 26b bzw. 28a, 28b, die an die jeweilige Länge der Segmente 2a, 2b zugeschnitten sind. Innerhalb der Segmente 2a, 2b sind die Energiebusteilsträngen 24a, 24b, 26a, 26b jedoch ungeschnitten. Vor der Installation des Energieversorgungsnetzes 4 sind die Energiebusleitungen 6, 8 "gleichsam unendlich lang" und werden entsprechend der Länge der Trägermastsegmente auf Maß zugeschnitten. Die einzelnen Module 10 werden dann individuell an den Energiebusteilsträngen 24a, 24b, 26a, 26b an den Stellen, an denen sie benötigt werden, befestigt. Die Energiebusteilsträngen 24a, 24b, 26a, 26b sind in den Grenzbereichen der Segmente 2a, 2b über weitere Industriesteckverbinder 30 miteinander verbunden.

### Bezugszeichenliste

- 2a,b: Segment
- 4: Energieversorgungsnetz
- 6: Energiebusleitung
- 8: Energiebusleitung
- 10: Modul, Industriesteckverbinder
- 12: Abgriff, Steckverbinderunterteil
- 14: Unterseite
- 16: Steckverbinderoberteil
- 18: Rasthaken
- 20: Leuchtelement
- 22: 3-polige-Wartungssteckdose
- 24: 5-polige-Wartungssteckdose
- 26a,b: Energiebusteilstrang
- 28a,b: Energiebusteilstrang
- 30: weitere Industriesteckverbinder

## Patentansprüche

1. Energieversorgungsnetz (4) zur internen Energieversorgung eines Trägermastes einer Windkraftanlage,
• mit einer Energiebusleitung (6),
• mit mindestens einem Abgriff (12) an der Energiebusleitung (6) zum Abgreifen eines elektrischen Potentials und
• mit einem an den Abgriff (12) angeschlossenen elektrischen Gerät (16)
**dadurch gekennzeichnet,**
**dass** das elektrische Gerät am Abgriff (21) sowohl elektrisch angeschlossen als auch mechanisch adaptiert ist.

2. Energieversorgungsnetz (4) nach Anspruch 1,
**gekennzeichnet durch**
ein Steckverbinderunterteil als Abgriff (12) mit Anschlusskontakten zur Kontaktierung der Energiebusleitung und mit Stecker- und /oder Buchsenkontakten als Anschluss an das elektrische Gerät.

3. Energieversorgungsnetz (4) nach Anspruch 2,
**gekennzeichnet durch**
eine an der der Energiebusleitung (6) im Montageendzustand zugewandten Unterseite (14) des Steckverbinderunterteils (12) ausgebildete und über die Energiebusleitung (6) stülpbare Nut mit aus dem Nutgrund vorspringenden Durchdringungskontakten zur Schneid-Klemmkontaktierung der Energiebusleitung (6).

4. Energieversorgungsnetz (4) nach Anspruch 2 oder Anspruch 3,
**gekennzeichnet durch**
mindestens einen, vorzugsweise zwei an den Enden des Steckverbinderunterteils (12) angeordnete schwenkbare Rasthaken (18) zur mechanischen Fixierung eines Steckverbinderoberteils (16) auf dem Steckverbinderunterteil (12).

5. Energieversorgungsnetz (4) nach Anspruch 4,
**dadurch gekennzeichnet,**
**dass** das elektrische Gerät (20) und das Steckverbinderoberteil (16) einstückig ausgebildet sind.

6. Energieversorgungsnetz (4) nach Anspruch 5,
**gekennzeichnet durch**
ein Leuchtelement (20), vorzugsweise eine LED-Leuchte, als elektrisches Gerät.

7. Energieversorgungsnetz (4) nach Anspruch 6,
**dadurch gekennzeichnet**,
drei Leuchtelemente (20) pro Steckverbinderoberteil (16).

8. Energieversorgungsnetz (4) nach einem der Ansprüche 1 bis 7,
**dadurch gekennzeichnet,**
• **dass** der Trägermast ein aus mehreren Rohrabschnitten zusammengesetzter Rohrturm ist und
• **dass** jeder Rohrabschnitt mindestens einen ungeschnittenen und an seine jeweilige Rohrlänge angepassten Energiebusteilstrang (26a, 26b) aufweist derart,
• **dass** sich die Energiebusleitung (6) aus den jeweiligen Energiebusteilsträngen (26a, 26b) der einzelnen aufeinandergesetzten Rohrabschnitte zusammensetzt.

9. Energieversorgungsnetz (4) nach Anspruch 8,
**dadurch gekennzeichnet, dass**
die einzelnen Energiebusteilstränge (26a, 26b) über Industriesteckverbinder (30) miteinander verbunden sind.

10. Energieversorgungsnetz (4) nach einem der vorhergehenden Ansprüche,
**dadurch gekennzeichnet, dass**
die Energiebusleitung (6) mit mehreren Abgriffen (12) vorkonfektioniert ist, die insbesondere in gleichen Abständen angebracht sind.

11. Energieversorgungsnetz (4) nach einem der vorhergehenden Ansprüche,
**gekennzeichnet durch**
eine Batterie zur Notstromversorgung des elektrischen Geräts.

12. Elektrischer Steckverbinder (10) umfassend
• ein Steckverbinderunterteil (12) mit Anschlusskontakten zur Kontaktierung einer Energiebusleitung (6) sowie
• ein Steckverbinderoberteil (16) mit zumindest einem integrierten Leuchtelement (20).
